(19) Europäisches Patentamt
European Patent Office
Office européen des brevets

(11) **EP 1 935 167 B1**

(12) **EUROPÄISCHE PATENTSCHRIFT**

(45) Veröffentlichungstag und Bekanntmachung des Hinweises auf die Patenterteilung:
**07.11.2012 Patentblatt 2012/45**

(21) Anmeldenummer: **06793605.4**

(22) Anmeldetag: **18.09.2006**

(51) Int Cl.:
***H04M 3/30*** *(2006.01)*

(86) Internationale Anmeldenummer:
**PCT/EP2006/066467**

(87) Internationale Veröffentlichungsnummer:
**WO 2007/036451 (05.04.2007 Gazette 2007/14)**

(54) **VERFAHREN UND ANORDNUNG ZUM DURCHFÜHREN EINES SATZTESTS AN EINER TEILNEHMERANSCHLUSSBAUGRUPPE**

METHOD AND ARRANGEMENT FOR PERFORMING A SET TEST ON A SUBSCRIBER CONNECTION COMPONENT

PROCEDE ET DISPOSITIF POUR METTRE EN OEUVRE UN TEST DE CIRCUIT SUR UN MODULE DE RACCORDEMENT D'ABONNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.09.2005 DE 102005046964**

(43) Veröffentlichungstag der Anmeldung:
**25.06.2008 Patentblatt 2008/26**

(73) Patentinhaber: **Nokia Siemens Networks GmbH & Co. KG**
**81541 München (DE)**

(72) Erfinder:
• **DIEGEL, Heike**
**82393 Iffeldorf (DE)**
• **DOLLINGER, Rudolf**
**81243 München (DE)**
• **KRIMMER, Roland**
**82110 Germering (DE)**
• **SIEBEN, Bernhard**
**82061 Neuried (DE)**

(56) Entgegenhaltungen:
**DE-A1- 19 907 925**

**Beschreibung**

Die Erfindung betrifft ein Verfahren und eine Einrichtung zum Durchführen eines Satztests an einer Teilnehmeranschlussbaugruppe mit einer der Teilnehmeranschlussbaugruppe zugeordneten, zwei Adern umfassenden Teilnehmeranschlussleitung.

Um für Teilnehmer, die über Teilnehmeranschlussleitungen an ein Kommunikationsnetz angeschlossen sind, eine gleich bleibende Qualität der angebotenen Dienste ("quality of service") bereitstellen zu können, müssen die Betreiber des Kommunikationsnetzes oder Telekommunikationsnetzes die Teilnehmeranschlussleitungen sowie die den jeweiligen Teilnehmern zugeordneten Teilnehmeranschlussbaugruppen oder die entsprechenden, auf der Teilnehmeranschlussbaugruppe befindlichen Komponenten auf ihre korrekte Funktion hin überprüfen.

Unter diesen Tests spielt insbesondere der so genannten DC-Satztest, d.h. die Überprüfung bzw. der Test der amtseitig (also auf Seiten der Vermittlungsstelle) angeordneten Teilnehmeranschlussbaugruppen eine zentrale Rolle, wobei unter anderem beispielsweise die Stromspeisung in den unterschiedlichen Betriebszuständen der Baugruppe untersucht wird.

Ein derartiger Test wurde bisher - und wird zum Teil auch noch aktuell - mit von dem Kommunikationsnetz unabhängigen Messausrüstungen durchgeführt. Dabei werden beispielsweise mit externen, an die Teilnehmeranschlussleitung oder direkt an die Komponenten der Teilnehmeranschlussbaugruppe anzuschließenden Messgeräten der Strom und die Spannung auf den Teilnehmeranschlussleitungen ermittelt, wobei überprüft wird, ob die jeweilige Teilnehmeranschlussbaugruppe in der Lage ist, den geforderten Stromfluss bereitzustellen.

Aufgrund der durch den technischen Fortschritt ermöglichten höheren Integration der einzelnen Bausteine in den Teilnehmeranschlussbaugruppen können diese Leitungs- und Baugruppentests in zunehmendem Maße auch von den Bausteinen selbst vorgenommen werden.

Bei allen aktuellen Tests zur Überprüfung der Teilnehmeranschlussbaugruppe ergeben sich jedoch Probleme durch Störungen, die auf der Teilnehmeranschlussleitung auftreten. Eine solche Anschlussleitung besteht normalerweise aus allgemein bekannten Kupfer-Doppeladern und ist vermittlungsstellenseitig mit der Teilnehmeranschlussschaltung verbunden. Die Teilnehmeranschlussschaltung ist also diejenige Komponente der Teilnehmeranschlussbaugruppe, die direkt physikalisch mit der Teilnehmeranschlussleitung verbunden ist.

Bei den oben erwähnten Störungen kann es sich dabei beispielsweise um auf der Leitung auftretende Leckströme handeln. Derartige Leckströme entstehen zum Beispiel durch Leckwiderstände an der realen Teilnehmeranschlussleitung oder auch durch Fremdströme auf der realen Leitung.

Insbesondere bei den weiter oben beschriebenen Satztests führen solche Störungen jedoch häufig zu verfälschten, fehlerhaften Ergebnissen.

Um derartige Störungen durch die angeschlossene Teilnehmeranschlussleitung zu unterbinden, wird bei den herkömmlichen, dem Stand der Technik zuzuordnenden Testverfahren während der Überprüfung die Anschlussleitung von der Teilnehmeranschlussbaugruppe entkoppelt. Anstelle der Teilnehmeranschlussleitung wird eine (zumeist auf der Teilnehmeranschlussbaugruppe angeordnete) Testimpedanz zwischen die beiden Adern der Teilnehmeranschlussleitung geschaltet.

Das Trennen der Anschlussleitung von der Teilnehmeranschlussbaugruppe und das Zwischenschalten der Testimpedanz zwischen die beiden Adern des Leitungsausgangs der Teilnehmeranschlussleitung werden dabei von zumeist auf der Teilnehmeranschlussbaugruppe angeordneten Relais übernommen. Jeder Teilnehmeranschlussbaugruppe bzw. jedem "Satz", also jeder auf der Teilnehmeranschlussbaugruppe befindlichen Teilnehmeranschlussschaltung, sind dabei ein oder zwei Relais und dazugehörige Wechsler zugeordnet.

Durch die oben beschriebene Nutzung der Testimpedanz können auf der Teilnehmeranschlussleitung auftretende Störungen das Testergebnis nicht mehr beeinflussen.

Ein derartiges Verfahren zur Durchführung eines Satztestes ist beispielsweise in der deutschten Offenlegungsschrift DE19907925A1 "Teilnehmeranachlussschaltung für den Anschluss einer analogen Teilnehmerleitung mit integrierten Mitteln zur Durchführung von Prüffunktionen" offenbart.

Nachteilig an den beschriebenen bisherigen Verfahren zur Durchführung eines Satztests ist jedoch unter anderem, dass auf der Teilnehmeranschlussbaugruppe durch die Unterbringung der zusätzlich benötigen Elemente (z.B. Testimpedanz und Relais) ein umfangreicherer Hardware-Aufwand erforderlich ist, was einen erhöhten schaltungstechnischen (z.B. Flächenbedarf) sowie wirtschaftlichen Aufwand zur Folge hat.

Die Aufgabe der Erfindung ist daher, ein Verfahren zur Durchführung eines Satztests zu schaffen, bei dem die oben genannten Nachteile vermieden werden.

Diese Aufgabe wird ausgehend von einem Verfahren gemäß den Merkmalen des Patentanspruchs 1 sowie ausgehend von einer Anordnung gemäß den Merkmalen von Patentanspruch 8 gelöst.

Der wesentliche Aspekt des erfindungsgemäßen Verfahrens zum Durchführen eines Satztests an einer Teilnehmeranschlussbaugruppe mit einer der Teilnehmeranschlussbaugruppe zugeordneten, zwei Adern umfassenden Teilnehmeranschlussleitung ist insbesondere darin zu sehen, dass an die zwei Adern der Teilnehmeranschlussleitung eine vorgebbare Spannung angelegt wird und eine erste den auf zumindest einer der zwei Adern der Teilnehmeranschlussleitung fließenden Strom repräsentierende Information ermittelt wird. Anschließend wird zumindest eine erste Testimpedanz zwischen Erde und die erste Ader der Teilnehmeranschlussleitung geschaltet und zumindest eine zweite Testimpedanz zwischen eine vorgebbare Testspannung und die zweite Ader der Teilnehmeranschlussleitung geschaltet. Daraufhin wird eine zweite den auf zumindest einer der zwei Adern fließenden Strom repräsentierende Information ermittelt und aus der ersten und der zweiten den über die zumindest eine Testimpedanz fließenden Strom repräsentierende Information eine den im Rahmen des Satztests zu testenden Strom repräsentierende Information ermittelt. Anhand der ermittelten Information wird schließlich das ordnungsgemäße Funktionieren der Teilnehmeranschlussbaugruppe überprüft.

Der wesentliche Vorteil des erfindungsgemäßen Verfahrens besteht darin, dass eine externe Messausrüstung und der damit verbundene zusätzliche personelle und finanzielle Aufwand vermieden werden.

Als Testimpedanz wird vorteilhaft zumindest ein auf der Teilnehmeranschlussbaugruppe angeordneter Widerstand verwendet - Anspruch 3. Dabei können beispielsweise Widerstände verwendet werden, die auf der Baugruppe bereits vorhanden sind, ursprünglich um andere Funktionen zu erfüllen. Dabei wird zum Beispiel vorteilhaft ein Widerstand zum Testen der Leitung im Ruhezustand verwendet.

Das Schalten der zumindest einen ersten Testimpedanz zwischen die erste Ader und Erde wird vorteilhaft mittels zumindest eines auf der Teilnehmeranschlussbaugruppe angeordneten ersten Schalters durchgeführt - Anspruch 4. In einer weiteren vorteilhaften Ausführungsform des erfindungsgemäßen Verfahrens wird das Schalten der zumindest einen zweiten Testimpedanz zwischen die zweite Ader und die Testspannung mittels zumindest eines auf der Teilnehmeranschlussbaugruppe angeordneten zweiten Schalters durchgeführt - Anspruch 5. Für diese beiden Schalter können bereits auf der Teilnehmeranschlussbaugruppe befindliche Schalter verwendet werden.

Zusätzlich können für den zumindest einen ersten und/oder für den zumindest einen zweiten Schalter vorteilhaft Transistoren verwendet werden - Anspruch 6.

Die den Strom repräsentierende Information wird vorteilhaft mit Hilfe eines auf der Teilnehmeranschlussbaugruppe angeordneten Messgeräts ermittelt - Anspruch 7. Der Vorteil hierbei ist, dass ebenfalls ein Messgerät verwendet werden kann, dass ohnehin auf der Teilnehmeranschlussbaugruppe vorhanden ist und nicht zusätzlich installiert werden muss.

Weitere vorteilhafte Ausführungsformen des erfindungsgemäßen Verfahrens sowie vorteilhafte Ausgestaltungen einer erfindungsgemäßen Anordnung sind den weiteren Ansprüchen zu entnehmen.

Im Folgenden wird die Erfindung mit Hilfe der beigefügten Zeichnungen detaillierter erläutert. Dabei zeigt:

Fig. 1 ein Anordnungsszenario bei Durchführung eines ersten Abschnitts des erfindungsgemäßen Verfahrens und

Fig. 2 ein Anordnungsszenario bei Durchführung eines zweiten Abschnitts des erfindungsgemäßen Verfahrens.

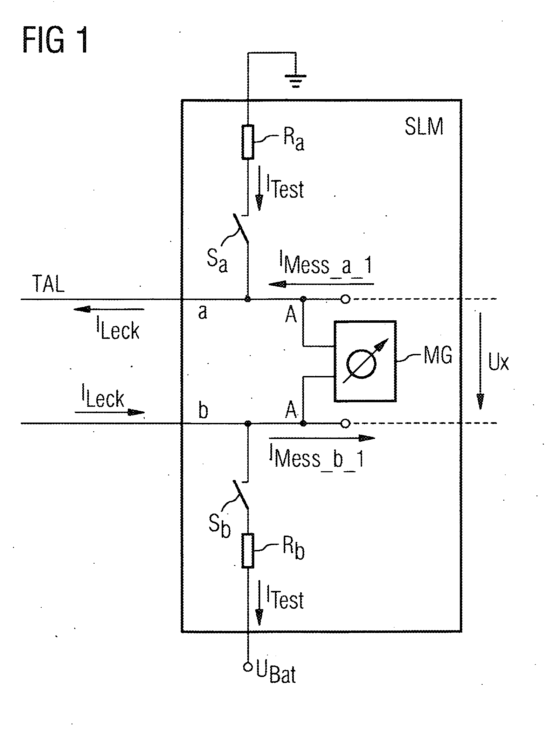

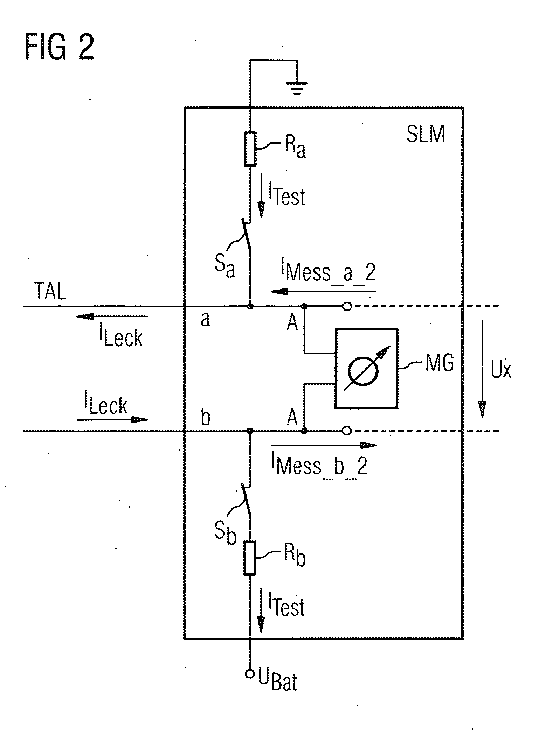

In den Figuren 1 und 2 ist beispielhaft der schematische Aufbau einer Teilnehmeranschlussbaugruppe (SLM - "subscriber line module") für die Durchführung des erfindungsgemäßen Verfahrens dargestellt. Zwei Adern a und b einer Teilnehmeranschlussleitung TAL sind auf Seiten des Teilnehmers mit einem Endgerät verbunden (in den Fig. 1 und 2 nicht gezeigt). Vermittlungsseitig sind die zwei Adern a und b an die Teilnehmeranschlussbaugruppe SLM angeschlossen.

Des Weiteren zeigen die Fig. 1 und 2 ein auf der Teilnehmeranschlussbaugruppe SLM angeordnetes Messgerät MG, welches den Stromfluss auf der Teilnehmeranschlussleitung TAL ermitteln kann, sowie einen ersten Widerstand $R_a$, der mit Hilfe eines ersten Schalters $S_a$ zwischen die erste Ader a der Anschlussleitung TAL und Erde geschaltet werden kann, und einen zweiten Widerstand $R_b$, der mit Hilfe eines zweiten Schalters $S_b$ zwischen die zweite Ader b der Anschlussleitung TAL und eine Versorgungsspannungsquelle $U_{Bat}$ der Teilnehmeranschlussbaugruppe SLM geschaltet werden kann.

Die beiden Widerstände $R_a$ und $R_b$ sowie die entsprechenden Schalter $S_a$ bzw. $S_b$ sind beispielsweise solche Bauelemente, wie sie auf herkömmlichen Teilnehmeranschlussbaugruppen SLM üblicherweise zur Überwachung der Teilnehmeranschlussleitung TAL integriert sind. Bei den Schaltern $S_a$ und $S_b$ kann es sich dabei beispielsweise um einfache Transistoren handeln.

Erfindungsgemäß wird zu Beginn in einem ersten Verfahrensabschnitt (Fig. 1) durch die Teilnehmeranschlussbaugruppe SLM eine vorgebbare, durch die Teilnehmeranschlussbaugruppe SLM bereitgestellte Spannung ($U_x$) an die Teilnehmeranschlussleitung TAL angelegt. Mit Hilfe des Messgeräts MG werden anschließend die an einem Anschlusspunkt A des Messgeräts MG auf den beiden Adern a und b der Teilnehmeranschlussleitung TAL fließenden Ströme $I_{Mess\_a\_1}$ und $I_{Mess\_b\_1}$ ermittelt.

Dabei sind in diesem ersten Abschnitt des Verfahrens die Schalter $S_a$ und $S_b$ geöffnet, $I_{Mess\_a\_1}$ und $I_{Mess\_b\_1}$ entsprechen hier demnach den Leckströmen $I_{Leck\_a}$ bzw. $I_{Leck\_b}$ auf den Adern a und b der Teilnehmeranschlussleitung TAL. Bei diesen Strömen handelt es sich um Leckströme, die aufgrund von Leckwiderständen und Fremdströmen an den beiden Adern a und b der Anschlussleitung TAL entstehen.

Anschließend wird der Gesamtleckstrom $I_{Leck}$ aus den Werten der auf den beiden Adern a und b gemessenen Leckströme $I_{Leck\_a}$ bzw. $I_{Leck\_b}$ wie folgt berechnet:

$$I_{Leck} = (I_{Leck\_a} + I_{Leck\_b}) / 2.$$

Im nächsten Abschnitt (Fig. 2) des erfindungsgemäßen Verfahrens werden nun die Widerstände $R_a$ und $R_b$ über die geschlossenen Schalter $S_a$ und $S_b$ zwischen Ader a und Erde bzw. zwischen Ader b und die Versorgungsspannung $U_{Bat}$ der Teilnehmeranschlussbaugruppe SLM geschaltet. Anschließend werden erneut die am Anschlusspunkt A des Messgerätes MG auf beiden Adern a und b der Anschlussleitung TAL auftretenden Ströme $I_{Mess\_a\_2}$ und $I_{Mess\_b\_2}$ gemessen. Aus diesen Messergebnissen $I_{Mess\_a\_2}$ und $I_{Mess-b-2}$ wird der Wert des gesamten gemessenen Stroms $I_{Mess}$ wie folgt abgeleitet:

$$I_{Mess} = (I_{Mess\_a\_2} + I_{Mess\_b\_2}) / 2.$$

Dieser Strom $I_{Mess}$ umfasst sowohl den eigentlich fließenden Strom = $I_{Test}$ als auch den weiterhin auf der Teilnehmeranschlussleitung vorhandenen Leckstrom $I_{Leck}$:

$$I_{Mess} = (- I_{Test} + I_{Leck\_a} - I_{Test} + I_{Leck\_b}) / 2.$$

Wird nun von diesem Wert $I_{Mess}$ der bei der Messung störende, oben berechnete Leckstrom $I_{Leck}$ subtrahiert, so ergibt sich als zu überprüfender Wert $I_{Test}$:

$$I_{Test} = - (I_{Mess} - I_{Leck}).$$

Dieser Wert wird nun mit einem vorgegebenen Sollwert verglichen, um die korrekte Funktion der Teilnehmeranschlussbaugruppe SLM zu überprüfen. Liegt der Wert von $I_{Test}$ in einem Bereich um einen vorgebbaren Sollwert bzw. wird ein vorgebbarer Sollwert beispielsweise überschritten, so arbeitet die Teilnehmeranschlussbaugruppe SLM fehlerfrei, unterscheidet sich $I_{Test}$ jedoch um einen vorgegeben Wert von dem Sollwert, so liegt eine Funktionsstörung in der Teilnehmeranschlussbaugruppe SLM vor.

Das erfindungsgemäße Verfahren ist in den unterschiedlichsten Betriebszuständen der Teilnehmeranschlussbaugruppe SLM anwendbar.

## Patentansprüche

1.   Verfahren zum Durchführen eines Satztests an einer Teilnehmeranschlussbaugruppe (SLM) mit einer der Teilnehmeranschlussbaugruppe (SLM) zugeordneten, zwei Adern (a, b) umfassenden Teilnehmeranschlussleitung (TAL), bei dem

   - an die zwei Adern (a, b) der Teilnehmeranschlussleitung (TAL) eine vorgebbare Spannung ($U_x$) angelegt wird,
   - auf den zwei Adern (a, b) der Teilnehmeranschlussleitung (TAL) fließende erste Ströme ($I_{Mess\_a\_1}$, $I_{Mess\_b\_1}$) ermittelt werden,
   - zumindest eine erste Testimpedanz ($R_a$) zwischen Erde und die erste Ader (a) der Teilnehmeranschlussleitung (TAL) geschaltet wird, und zumindest eine zweite Testimpedanz ($R_b$) zwischen eine vorgebbare Testspannung ($U_{Bat}$) und die zweite Ader (b) der Teilnehmeranschlussleitung (TAL) geschaltet wird,
   - auf den zwei Adern (a, b) der Teilnehmeranschlussleitung (a, b) fließende zweite Ströme ($I_{Mess\_a\_2}$, $I_{Mess\_b\_2}$) ermittelt werden,

- aus den ersten und den zweiten über die zumindest eine Testimpedanz ($R_a$, $R_b$) fließenden Strömen ($I_{Mess\_a\_1}$, $I_{Mess\_b\_1}$, $I_{Mes\_a\_2}$, $I_{Mess\_b\_2}$) ein im Rahmen des Satztests zu testender Strom ($I_{Test}$) ermittelt wird, und
- anhand des ermittelten zu testenden Stroms ($I_{Test}$) das ordnungsgemäße Funktionieren der Teilnehmeranschlussbaugruppe (SLM) überprüft wird,

**dadurch gekennzeichnet,**

**dass** der im Rahmen des Satztests zu testende Strom ($I_{Test}$) ermittelt wird, indem
- aus den ersten Strömen ($I_{Mess\_a\_1}$, $I_{Mess\_b\_1}$) ein Gesamtleckstrom ($I_{Leck}$) berechnet wird,
- aus den zweiten Strömen ($I_{Mess\_a\_2}$, $I_{Mess\_b\_2}$) ein Gesamtstrom ($I_{Mess}$) abgeleitet wird, und
- der Gesamtleckstrom ($I_{Leck}$) von dem Gesamtstrom ($I_{Mess}$) subtrahiert wird.

2. Verfahren nach Anspruch 1,
**dadurch gekennzeichnet,**
**dass** das Überprüfen des ordnungsgemäßen Funktionierens der Teilnehmeranschlussbaugruppe (SLM) durch einen Vergleich des ermittelten Stroms ($I_{Test}$) mit einem vorgebbaren Sollwert durchgeführt wird.

3. Verfahren nach Anspruch 1 oder 2,
**dadurch gekennzeichnet,**
**dass** als Testimpedanz ($R_a$, $R_b$) zumindest ein auf der Teilnehmeranschlussbaugruppe (SLM) angeordneter Widerstand verwendet wird.

4. Verfahren nach einem der vorhergehenden Ansprüche,
**dadurch gekennzeichnet,**
**dass** das Schalten der zumindest einen ersten Testimpedanz ($R_a$) zwischen die erste Ader (a) und Erde mittels zumindest eines auf der Teilnehmeranschlussbaugruppe (SLM) angeordneten ersten Schalters ($S_a$) durchgeführt wird.

5. Verfahren nach einem der vorhergehenden Ansprüche,
**dadurch gekennzeichnet,**
**dass** das Schalten der zumindest einen zweiten Testimpedanz ($R_b$) zwischen die zweite Ader (b) und die Testspannung ($U_{Bat}$) mittels zumindest eines auf der Teilnehmeranschlussbaugruppe (SLM) angeordneten zweiten Schalters ($S_b$) durchgeführt wird.

6. Verfahren nach den Ansprüchen 4 oder 5,
**dadurch gekennzeichnet,**
**dass** für den zumindest einen ersten und/oder für den zumindest einen zweiten Schalter ($S_a$, $S_b$) Transistoren verwendet werden.

7. Verfahren nach einem der vorhergehenden Ansprüche,
**dadurch gekennzeichnet,**
**dass** die Ströme ($I_{Mess\_a\_1}$, $I_{Mess\_b\_1}$, $I_{Mess\_a\_2}$, $I_{Mess\_b\_2}$) mit Hilfe eines auf der Teilnehmeranschlussbaugruppe (SLM) angeordneten Messgeräts (MG) ermittelt werden.

8. Anordnung zum Durchführen eines Satztests an einer Teilnehmeranschlussbaugruppe (SLM) mit einer der Teilnehmeranschlussbaugruppe (SLM) zugeordneten, zwei Adern (a, b) umfassenden Teilnehmeranschluesleitung (TAL) und

- Anlegemitteln zum Anlegen einer vorgebbaren Spannung an die zwei Adern (a, b) der Teilnehmeranschlussleitung (TAL),
- Erfassungsmitteln zum Ermitteln von ersten auf den zwei Adern (a, b) der Teilnehmeranschlussleitung (TAL) fließenden Strömen ($I_{Mess\_a\_1}$, $I_{Mess\_b\_1}$),
- Schaltmitteln zum Schalten zumindest einer ersten Testimpedanz ($R_a$) zwischen Erde und die erste Ader (a) der Teilnehmeranschlussleitung (TAL) und Schaltmitteln zum Schalten zumindest einer zweiten Testimpedanz ($R_b$) zwischen eine vorgebbare Testspannung ($U_{Bat}$) und die zweite Ader (b) der Teilnehmeranschlussleitung (TAL),
- Erfassungsmitteln zum Ermitteln von zweiten auf den zwei Adern (a, b) fließenden Strömen ($T_{Mess\_a\_2}$, $I_{Mess\_b\_2}$),
- Erfassungsmitteln zum Ermitteln eines im Rahmen des Satztests zu testenden Stroms ($I_{Test}$) aus den ersten und den zweiten über die zumindest eine Testimpedanz ($R_a$, $R_b$) fließenden Strömen ($I_{Mess\_a\_1}$, $I_{Mess\_b\_1}$,

$I_{Mess\_a\_2}$, $I_{Mess\_b\_2}$), und
- Überprüfungsmitteln zum Überprüfen des ordnungsgemäßen Funktionierens der Teilnehmeranschlussbaugruppe (SLM) anhand des ermittelten zu testenden Stroms ($-I_{Test}$),
**dadurch gekennzeichnet,**
**dass** die Erfassungsmittel zum Ermitteln des zu testenden Stroms Mittel umfassen zum
- Berechnen eines Gesamtleckstroms ($I_{Leck}$) aus den ersten Strömen ($I_{Mess\_a\_1}$, $I_{Mess\_b\_1}$),
- Ableiten eines Gesamtstroms ($I_{Mess}$) aus den zweiten Strömen ($I_{Mess\_a\_2}$, $I_{Mees\_b\_2}$), und
- zum Subtrahieren des Gesamtleckstroms ($I_{Leck}$) von dem Gesamtstrom ($I_{Mess}$).

9. Anordnung nach Anspruch 8,
**dadurch gekennzeichnet,**
**dass** die Überprüfungsmittel derart ausgestaltet sind, dass das Überprüfen des ordnungsgemäßen Funktionierens der Teilnehmeranschlussbaugruppe (SLM) durch einen Vergleich des ermittelten Stroms ($I_{Test}$) mit einem Sollwert durchgeführt wird.

10. Anordnung nach Anspruch 8 oder 9,
**dadurch gekennzeichnet,**
**dass** die erste und/oder die zweite Testimpedanz ($R_a$, $R_b$) zumindest ein auf der Teilnehmeranschlussbaugruppe (SLM) angeordneter Widerstand ist.

11. Anordnung nach einem der Ansprüche 8 bis 10,
**dadurch gekennzeichnet,**
**dass** die Schaltmittel zum Schalten der zumindest einen ersten Testimpedanz ($R_a$) zwischen die erste Ader (a) und Erde durch zumindest einen auf der Teilnehmeranschlussbaugruppe (SLM) angeordneten ersten Schalter ($S_a$) realisiert sind.

12. Anordnung nach einem der Ansprüche 8 bis 11,
**dadurch gekennzeichnet,**
**dass** die Schaltmittel zum Schalten der zumindest einen zweiten Testimpedanz ($R_b$) zwischen die zweite Ader (b) und die Testspannung ($U_{Bat}$) durch zumindest einen auf der Teilnehmeranschlussbaugruppe (SLM) angeordneten zweiten Schalter ($S_b$) realisiert sind.

13. Einrichtung nach Anspruch 11 oder 12,
**dadurch gekennzeichnet,**
**dass** der zumindest eine erste und/oder der zumindest eine zweite Schalter ($S_a$, $S_b$) Transistoren sind.


**Claims**

1. Method for performing a set test on a subscriber line module (SLM) with a subscriber line (SL) comprising two wires (a, b), allocated to the subscriber line module (SLM), in which method

   - a predeterminable voltage ($U_x$) is applied to the two wires (a, b) of the subscriber line (SL),
   - first currents ($I_{meas\_a\_1}$, $I_{meas\_b\_1}$) flowing in the two wires (a, b) of the subscriber line (SL) are determined,
   - at least one first test impedance ($R_a$) is connected between earth and the first wire (a) of the subscriber line (SL) and at least one second test impedance ($R_b$) is connected between a predeterminable test voltage ($U_{bat}$) and the second wire (b) of the subscriber line (SL),
   - second currents ($I_{meas\_a\_2}$, $I_{meas\_b\_2}$) flowing in the two wires (a, b) of the subscriber line (SL) are determined,
   - a current ($I_{test}$) to be tested within the context of the set test, is determined from the first and the second currents ($I_{meas\_a\_1}$, $I_{meas\_b\_1}$, $I_{meas\_a\_2}$, $I_{meas\_b\_2}$) flowing via the at least one test impedance ($R_a$, $R_b$), and
   - by means of the determined current to be tested ($I_{test}$), the correct functioning of the subscriber line module (SLM) is checked,
   **characterized in that** the current ($I_{test}$) to be tested within the context of the set test is determined **in that**
   - a total leakage current ($I_{leak}$) is calculated from the first Currents ($I_{meas\_a\_1}$, $I_{meas\_b\_1}$),
   - a total current ($I_{meas}$) is derived from the second currents ($I_{meas\_a\_2}$, $I_{meas\_b\_2}$), and
   - the total leakage current ($I_{leak}$) is subtracted from the total current ($I_{meas}$).

2. Method according to Claim 1, **characterized in that** the checking of the correct functioning of the subscriber line module (SLM) is performed by a comparison of the determined current ($I_{Test}$) with a predeterminable nominal value.

3. Method according to Claim 1 or 2, **characterized in that** at least one resistor arranged on the subscriber line module (SLM) is used as test impedance ($R_a$, $R_b$).

4. Method according to one of the preceding claims, **characterized in that** the switching of the at least one first test impedance ($R_a$) between the first wire (a) and earth is performed by means of at least one first switch ($S_a$) arranged on the subscriber line module (SLM).

5. Method according to one of the preceding claims, **characterized in that** the switching of the at least one second test impedance ($R_b$) between the second wire (b) and the test voltage ($U_{Bat}$) is performed by means of at least one second switch ($S_b$) arranged on the subscriber line module (SLM).

6. Method according to Claim 4 or 5, **characterized in that** transistors are used for the at least one first and/or for the at least one second switch ($S_a$, $S_b$).

7. Method according to one of the preceding claims, **characterized in that** the currents ($I_{meas\_a\_1}$, $I_{meas\_b\_1}$, $I_{meas\_a\_2}$, $I_{meas\_b\_2}$) are determined with the aid of a measuring instrument (MI) arranged on the subscriber line module (SLM).

8. Arrangement for performing a set test on a subscriber line module (SLM) with a subscriber line (SL) comprising two wires (a, b), allocated to the subscriber line module (SLM), and

   - applying means for applying a predetermined voltage to the two wires (a, b) of the subscriber line (SL),
   - acquisition means for determining first currents ($I_{meas\_3-1}$, $I_{meas\_b\_1}$) flowing in the two wires (a, b) of the subscriber line (SL),
   - switching means for switching at least one first test impedance ($R_a$) between earth and the first wire (a) of the subscriber line (SL) and switching means for switching at least one second test impedance ($R_b$) between a predeterminable test voltage ($U_{Bat}$) and the second wire (b) of the subscriber line (SL),
   - acquisition means for determining second currents ($I_{meas\_a\_2}$, $I_{meas\_b\_2}$) flowing in the two wires (a, b),
   - acquisition means for determining a current ($I_{test}$) to be tested within the context of the set test from the first and the second currents ($I_{meas\_a\_1}$, $I_{meas\_b-1}$, $I_{meas\_a\_2}$, $I_{meas\_b\_2}$) flowing via the at least one test impedance ($R_a$, $R_b$), and
   - checking means for checking the correct functioning of the subscriber line module (SLM) by means of the determined current ($I_{test}$) to be tested,
   **characterized in that** the acquisition means for determining the current to be tested comprise means for
   - calculating a total leakage current ($I_{leak}$) from the first Currents ($I_{meas\_a\_1}$, $I_{meas\_b\_1}$),
   - deriving a total current ($I_{meas}$) from the second currents ($I_{meas\_a\_2}$, $I_{meas\_b\_2}$), and
   - for subtracting the total leakage current ($I_{leak}$) from the total current ($I_{meas}$).

9. Arrangement according to Claim 8, **characterized in that** the checking means are constructed in such a manner that the checking of the correct functioning of the subscriber line module (SLM) is performed by a comparison of the determined current ($I_{test}$) with a nominal value.

10. Arrangement according to Claim 8 or 9, **characterized in that** the first and/or the second test impedance ($R_a$, $R_b$) is at least one resistor arranged on the subscriber line module (SLM).

11. Arrangement according to one of Claims 8 to 10, **characterized in that** the switching means for switching the at least one first test impedance ($R_a$) between the first wire (a) and earth is implemented by at least one first switch ($S_a$) arranged on the subscriber line module (SLM).

12. Arrangement according to one of Claims 8 to 11, **characterized in that** the switching means for switching the at least one second test impedance ($R_b$) between the second wire (b) and the test voltage ($U_{bat}$) is implemented by at least one second switch ($S_b$) arranged on the subscriber line module (SLM).

13. Device according to Claim 11 or 12, **characterized in that** the at least one first and/or the at least one second switch ($S_a$, $S_b$) are transistors.

**Revendications**

1. Procédé pour exécuter un test de circuit sur un module de raccordement d'abonné (SLM) avec une ligne de raccordement d'abonné (TAL) associée au module de raccordement d'abonné (SLM) et comprenant deux fils (a, b), dans lequel :

   - une tension prédéterminable ($U_x$) est appliquée sur les deux fils (a, b) de la ligne de raccordement d'abonné (TAL) ;
   - on détermine des premiers courants ($I_{Mess\_a\_1}$, $I_{Mess\_b\_1}$) passant par les deux fils (a, b) de la ligne de raccordement d'abonnés (TAL) ;
   - au moins une première impédance de test ($R_a$) est commutée entre la terre et le premier fil (a) de la ligne de raccordement d'abonné (TAL) et au moins une deuxième impédance de test ($R_b$) est commutée entre une tension de test prédéterminable ($U_{Bat}$) et le deuxième fil (b) de la ligne de raccordement d'abonné (TAL) ;
   - on détermine des deuxièmes courants ($I_{Mess\_a\_2}$, $I_{Mess\_b\_2}$) passant par les deux fils (a, b) de la ligne de raccordement d'abonnés (TAL);
   - on détermine un courant ($I_{Test}$) à tester dans le cadre du test de circuit à partir des premiers et des deuxièmes courants ($I_{Mess\_a\_1}$, $I_{Mess\_b\_1}$, $I_{Mess\_a\_2}$, $I_{Mess\_b\_2}$) qui passent par l'au moins une impédance de test ($R_a$, $R_b$) ; et
   - le bon fonctionnement du module de raccordement d'abonné (SLM) est vérifié à l'aide du courant ($I_{Test}$) à tester qui a été déterminé,

   **caractérisé en ce qu'**on détermine le courant ($I_{Test}$) à tester dans le cadre du test de circuit en :

   - calculant un courant de fuite total ($I_{Leck}$) à partir des premiers courants ($I_{Mess\_a\_1}$, $I_{Mess\_b\_1}$),
   - dérivant un courant total ($I_{Mess}$) à partir des deuxièmes courants ($I_{Mess\_a\_2}$, $I_{Mess\_b\_2}$) et
   - soustrayant le courant de fuite total ($I_{Leck}$) du courant total ($I_{Mess}$).

2. Procédé selon la revendication 1, **caractérisé en ce que** la vérification du bon fonctionnement du module de raccordement d'abonné (SLM) est effectuée par une comparaison du courant ($I_{Test}$) qui a été déterminé et d'une valeur de consigne prédéterminable.

3. Procédé selon la revendication 1 ou 2, **caractérisé en ce qu'**est utilisée, en tant qu'impédance de test ($R_a$, $R_b$), au moins une résistance située sur le module de raccordement d'abonné (SLM).

4. Procédé selon l'une des revendications précédentes, **caractérisé en ce que** la commutation de l'au moins une première impédance de test ($R_a$) entre le premier fil (a) et la terre est effectuée au moyen d'au moins un premier commutateur ($S_a$) situé sur le module de raccordement d'abonné (SLM).

5. Procédé selon l'une des revendications précédentes, **caractérisé en ce que** la commutation de l'au moins une deuxième impédance de test ($R_b$) entre le deuxième fil (b) et la tension de test ($U_{Bat}$) est effectuée au moyen d'au moins un deuxième commutateur ($S_b$) situé sur le module de raccordement d'abonné (SLM).

6. Procédé selon les revendications 4 ou 5, **caractérisé en ce que** des transistors sont utilisés pour l'au moins un premier et/ou pour l'au moins un deuxième commutateur ($S_a$, $S_b$).

7. Procédé selon l'une des revendications précédentes, **caractérisé en ce qu'**on détermine les courants ($I_{Mess\_a\_1}$, $I_{Mess\_b\_1}$, $I_{Mess\_a\_2}$, $I_{Mess\_b\_2}$) à l'aide d'un appareil de mesure (MG) situé sur le module de raccordement d'abonné (SLM).

8. Dispositif pour exécuter un test de circuit sur un module de raccordement d'abonné (SLM) avec une ligne de raccordement d'abonné (TAL) associée au module de raccordement d'abonné (SLM) et comprenant deux fils (a, b) et avec :

   - des moyens d'application pour appliquer une tension prédéterminable sur les deux fils (a, b) de la ligne de raccordement d'abonné(TAL) ;
   - des moyens de détection pour déterminer des premiers courants ($I_{Mess\_a\_1}$, $I_{Mess\_b\_1}$) passant par les deux fils (a, b) de la ligne de raccordement d'abonnés (TAL) ;
   - des moyens de commutation pour commuter au moins une première impédance de test ($R_a$) entre la terre et le premier fil (a) de la ligne de raccordement d'abonné (TAL) et des moyens de communication pour commuter au moins une deuxième impédance de test ($R_b$) entre une tension de test prédéterminable ($U_{Bat}$) et le deuxième fil (b) de la ligne de raccordement d'abonné (TAL) ;

- des moyens de détection pour déterminer des deuxièmes courants ($I_{Mess\_a\_2}$, $I_{Mess\_b\_2}$) passant par les deux fils (a, b) ;

- des moyens de détection pour déterminer un courant ($I_{Test}$) à tester dans le cadre du test de circuit à partir des premiers et des deuxièmes courants ($I_{Mess\_a\_1}$, $I_{Mess\_b\_1}$, $I_{Mess\_3\_2}$, $I_{Mess\_b\_2}$) qui passent par l'au moins une impédance de test ($R_a$, $R_b$) ; et

- des moyens de vérification pour vérifier le bon fonctionnement du module de raccordement d'abonné (SLM) à l'aide du courant ($I_{Test}$) à tester qui a été déterminé, **caractérisé en ce que** les moyens de détection pour déterminer le courant à tester comprennent des moyens pour :

- calculer un courant de fuite total ($I_{Leck}$) à partir des premiers courants ($I_{Mess\_a\_1}$, $I_{Mess\_b\_1}$),

- dériver un courant total ($I_{Mess}$) à partir des deuxièmes courants ($I_{Mess\_a\_2}$, $I_{Mess\_b\_2}$) et

- soustraire le courant de fuite total ($I_{Leck}$) du courant total ($I_{Mess}$).

9.  Dispositif selon la revendication 8, **caractérisé en ce que** les moyens de vérification sont réalisés de manière telle que la vérification du bon fonctionnement du module de raccordement d'abonné (SLM) est effectuée par une comparaison du courant ($I_{Test}$) qui a été déterminé et d'une valeur de consigne prédéterminable.

10. Dispositif selon la revendication 8 ou 9, **caractérisé en ce que** la première et/ou la deuxième impédance de test ($R_a$, $R_b$) est au moins une résistance située sur le module de raccordement d'abonné (SLM).

11. Dispositif selon l'une des revendications 8 à 10, **caractérisé en ce que** les moyens de commutation pour commuter l'au moins une première impédance de test ($R_a$) entre le premier fil (a) et la terre sont réalisés par au moins un premier commutateur ($S_a$) situé sur le module de raccordement d'abonné (SLM).

12. Dispositif selon l'une des revendications 8 à 11, **caractérisé en ce que** les moyens de commutation pour commuter l'au moins une deuxième impédance de test ($R_b$) entre le deuxième fil (b) et la tension de test ($U_{Bat}$) sont réalisés par au moins un deuxième commutateur ($S_b$) situé sur le module de raccordement d'abonné (SLM).

13. Dispositif selon la revendication 11 ou 12, **caractérisé en ce que** l'au moins un premier et/ou l'au moins un deuxième commutateur ($S_a$, $S_b$) sont des transistors.

# FIG 1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19907925 A1